# EUROPEAN PATENT SPECIFICATION

(11) **EP 4 250 542 B1**
(45) Date of publication and mention of the grant of the patent: **12.11.2025**
(21) Application number: 22164533.6
(22) Date of filing: 25.03.2022
(51) Int. Cl.: H02K 9/22, H02K 21/14, H02K 1/276

(54) **ELECTRIC MOTOR COMPRISING A MAGNETOCALORIC ELEMENT**
ELEKTRISCHER MOTOR MIT EINEM MAGNETOKALORISCHEN ELEMENT
MOTEUR ÉLECTRIQUE COMPRENANT UN ÉLÉMENT MAGNÉTOCALORIQUE

(43) Date of publication of application: 27.09.2023
(73) Proprietor: Volvo Car Corporation, 40531 Göteborg (SE)
(72) Inventor: Orbay, Raik Celal, 475 40 Hönö (SE)
(74) Representative: Nederlandsch Octrooibureau

(56) References cited:
- ES-T3- 2 382 018
- US-B2- 9 698 660
- GOTTSCHALL TINO ET AL: "A multicaloric cooling cycle that exploits thermal hysteresis", NATURE MATERIALS, NATURE PUBLISHING GROUP UK, LONDON, vol. 17, no. 10, 10 September 2018 (2018-09-10), pages 929 - 934, XP036598391, ISSN: 1476-1122, [retrieved on 20180910], DOI: 10.1038/S41563-018-0166-6

## Description

### Technical field

The present disclosure relates to an electric motor. The present disclosure further relates to a vehicle comprising such an electric motor and to a method for focused cooling of an electric motor.

### Background art

Electric motors are known having rotating or linear drive members that may comprise a plurality of magnetic elements, such as permanent magnets, interacting with a magnetic field that is generated by the stator. The motors can be of linear or rotary type, and the drive member is reciprocated or rotated by the changing magnetic field of the stator windings.

State of the art rotary permanent magnet synchronous machines (PMSM) utilize high grade permanent magnets that are placed in the rotor. Neodymium iron boron (NdFeB) permanent magnets are electrically conductive. Therefore, unwanted eddy currents arise in these permanent magnets when positioned in an alternating magnetic field. Consequently, the eddy currents will cause the permanent magnets in the rotor to heat up. For NdFeB magnets the Curie temperature is about 310°C. Permanent magnets with a low Curie temperature risk demagnetization if the temperature gets excessively high, causing the motor to become unusable. For that reason, thermal conditioning of the permanent magnets is crucial.

In the electric motors of the art, a coolant circuit is in thermally conductive contact with the stator and dissipates excess heat. In the usual cooling system solutions, the coolant circuit contacts the stator but has a reduced cooling effect on the magnets that are mounted within the rotor. The cooling of the magnetic elements is performed with temporal latency.

ES2382018 T3 and WO2011/040126 A1 describe electric motors using magnetocaloric elements to either heat or cool their rotors.

In NATURE MATERIALS, NATURE PUBLISHING GROUP UK, LONDON, vol. 17, no. 10, 10 September 2018 (2018-09-10), pages 929-934,ISSN: 1476-1122, DOI: 10.1038/S41563-018-0166-6, the use of magnetocaloric element combined with compression forces is used as a cooling system in a refrigerator.

Hence, there may be a need to provide an electric motor design which allows for a focused and efficient cooling in a reduced volume of a motor. There may further be a need to provide a vehicle comprising such an electric motor as well as a method of focused cooling of an electric motor.

### Summary

An electric motor according to the present invention is defined in claim 1 and comprises a stator comprising windings for generating a magnetic field, and a drive member comprising a number of magnetic elements, the drive member being movable relative to the stator when the stator windings are electrically energized to generate the magnetic field that interacts with the magnetic elements, the drive member comprising at least one magnetocaloric element that provides cooling of the magnetic elements when the magnetocaloric element is situated in the magnetic field, and having magnetic domain orientations that are reset when the magnetocaloric element is subject to compression forces resulting from a radial or a linear acceleration of the drive member when the rotational or linear acceleration of the drive member is above a predetermined threshold.

The magnetocaloric elements provide direct cooling of the magnetic elements in the drive member, due to the magnetocaloric effect. The magnetocaloric effect is a cooling effect that occurs in certain materials when an external magnetic field is present. Materials showing such a cooling effect are referred to as "magnetocaloric materials". Magnetocaloric materials undergo a change of their microstructure while in a magnetic field, which change remains after removing of the field. This leaves the magnetocaloric material 'locked' in the magnetization state due to the hysteresis. According to the disclosure, an additional external stimulus, that is, a mechanical stress, is applied to the magnetocaloric material to 'unlock' the magnetocaloric material and return it to its original state.

The efficiency of the electric motor of the disclosure is improved, with reduced heat peaks in the movable drive member, by cooling down magnetic elements in the drive member rapidly and directly due to positioning one or more magnetocaloric elements near the drive member's magnetic elements. The magnetic elements of the drive member may comprise windings or permanent magnets.

While the magnetic field of the stator accelerates the drive member, the cooling by the magneto caloric materials prevents overheating of the drive member's magnetic elements. When the drive member reaches a high linear or rotational acceleration that is above a predetermined threshold rpm or oscillating frequency, the magnetocaloric materials are brought back to their initial state and can again exert their cooling effect.

The electric motor may be of at least one of the rotary type, the linear type, the induction type and the synchronous reluctance type motor, the synchronous reluctance type being with or without permanent magnet assistance, the switched reluctance type, the axial flux type, the transversal flux type. The electric motor structure comprising magnetocaloric material is suited for a variety of electric motors which under high compression forces allow for a controlled cyclic cooling of the motor.

The magnetocaloric element is in an abutting relationship with a compression member, such as a magnetic element, the compression member having a predetermined mass for exerting a compressive force on the magnetocaloric element when the rotational or linear acceleration of the drive member is above the predetermined threshold.

The compression of the magnetocaloric element may be effected by a part of the drive member, such as the walls of a cavity in the drive member body in which the magnetocaloric element is accommodated or a compression mass abutting the magnetocaloric element. The cavity may be formed in the body of the drive member, or may be situated at least partly at the perimeter of the drive member and may comprise a slit or a groove in the drive member material. In an example embodiment, the magnetic elements of the drive member may compress the magnetocaloric element. An effective cooling is achieved by the use of magnetocaloric elements and the compression members, which can be embedded in an existing motor structure, facilitating the control of magnet losses without excessively increasing the motor volume or without complex coolant systems.

When the rotational or linear acceleration of the drive member is above the predetermined threshold, the rotational speed may be higher than 10000 RPM or an oscillation frequency may be 160 Hz or more and the compression forces on the magnetocaloric element may be larger than 50 MPa.

The acceleration of the electric motor will lead to high compressive forces in the drive member, acting on the magnetocaloric element and causing a reset of the magnetocaloric element to its initial magnetization state with only a limited increase of its temperature.

The magnetocaloric element may comprise an inverse magnetocaloric material, preferably a NiMnIn based Heusler alloy.

Inverse magnetocaloric materials, such as Heusler alloys (NiMnIn), cool when the magnetic field is applied, preferably adiabatically.

The magnetic elements of the drive member may comprise permanent magnets.

The magnetocaloric cooling prevents overheating of the permanent magnets due to eddy current losses. In the case the magnetic elements comprise windings, overheating due to ohmic losses, is prevented. The magnetocaloric element may be in direct contact with the windings and/or the permanent magnets of the drive member. By positioning the magnetocaloric element directly near the heat source in the drive member, direct and focused cooling of hot spots is achieved.

The drive member may comprise a body with a cavity in which a magnetic element and a magnetocaloric element are accommodated in an abutting relationship.

By housing the magneto caloric element and the magnetic element in the same cavity in the body of the drive member, effective cooling of magnetic element and compression the magneto caloric element are achieved.

The drive member may comprise a rotor with a number of permanent magnets arranged in pairs having a V-shaped intersect with a radial line r of the rotor.

The orientation of magnets in a V-shaped pattern, allows for a better concentration of the magnetic field flux and reduced cogging torque.

The orientations of the magnetocaloric elements can be chosen to obtain maximum use of the centrifugal force the by the relative orientation of the magnetocaloric element to the centrifugal force.

The drive member may comprise rotor with a number of permanent magnets arranged on an outer surface of the rotor.

As the magnetocaloric element is in proximity to the stator, supplemental cooling of the stator is enabled.

The magnetic elements of the drive member may comprise windings.

The windings can be effectively cooled by the magnetocaloric element being in an abutting relationship contact with at least one winding.

The electric motor of the disclosure may be used in an electric vehicle and allows for more efficient and frequent acceleration and deceleration cycles, due to better energy conversion efficiency.

In another aspect of the present disclosure, a method of cooling of an electric motor is disclosed and defined in claim 11, the method comprising:
- removing heat from the magnetic elements via the magnetocaloric element at a rate exceeding 50 W by exposing the magnetocaloric element to a magnetic field that is generated by magnetic elements of the stator, and
- exerting a compression force on the magnetocaloric element of at least 50 MPa, resetting its magnetic domain orientations.

Accommodating a magnetocaloric element in a rotor or a sliding member allows for a more focused cooling of the motor, while applying a relatively high magnetic field, followed by high centrifugal forces exerting uniaxial compression forces on the magnetocaloric element and returning it to its initial magnetic state.

The compression force of at least 50MPa may be generated by rotating the drive member at a rotational speed higher than 10000 RPM or reciprocating the drive member at an oscillation frequency of 160 Hz or more.

### Brief description of the drawings

The disclosure will be explained in more detail below with reference to drawings in which illustrative embodiments of the disclosure are shown. It will be appreciated by the person skilled in the art that other alternative and equivalent embodiments of the disclosure can be conceived and reduced to practice without departing from the true spirit of the disclosure, the scope of the disclosure being limited only by the appended claims.
Figure 1 shows a cross-sectional view of an electric motor of the rotary type,
Figure 2 shows a section of a pole of the electric motor of Fig. 1 on an enlarged scale,
Figure 3a shows the compressive forces acting on a magneto caloric material in the motor of fig. 1, exerted by the permanent magnet,
Figure 3b shows the compressive forces acting on a magneto caloric material in the motor of fig. 1, exerted by the a compression member,
Figure 4 shows a schematic section of an electric motor of the linear type comprising electro caloric elements,
Figure 5 shows the compressive forces acting on a magneto caloric material in the motor of fig. 4, and
Figure 6 shows a routine for cooling of an electric motor.

### Detailed Description

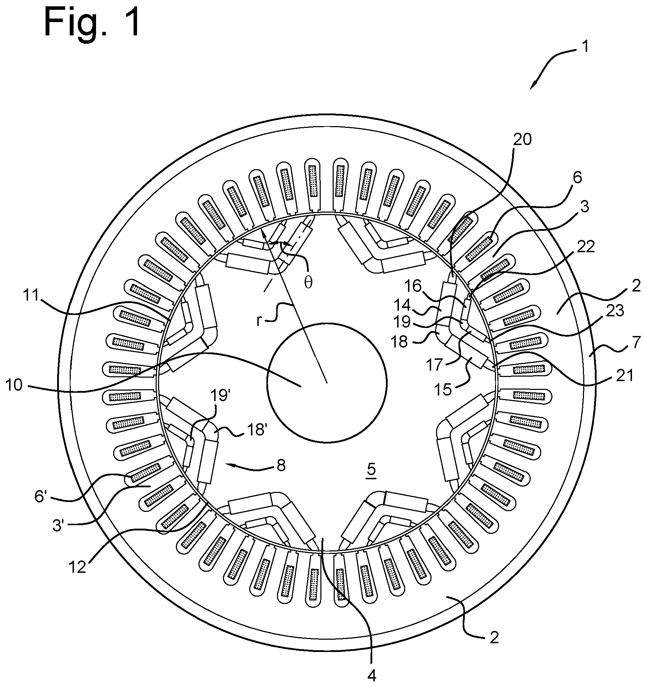

Figure 1 shows a section of a permanent magnet electric motor 1 of the rotary type. The electric motor 1 comprises a rotor 4 of radius r which is coaxially surrounded by a stator 2. The stator 2 carries a number of windings 6, 6' distributed around the stator circumference, each winding surrounding a respective radial tooth 3, 3' of the stator core. End faces of the stator teeth 3, 3' are situated on a cylindrical surface 12. The shown electric motor has eight poles. The windings 6, 6' are shown to be of the stranded type but may also be of the hairpin type or any other type known to the art. The windings may be made of conducting materials such as copper or aluminum. When powered by an AC current source, the windings 6, 6' in the stator 2 generate a rotating magnetic field. The stator 2 comprises a cooling jacket 7 for cooling of the windings 6, 6'.

The rotor 4 comprises a plurality of groups 8, 8' of permanent magnets 14, 15, 16, 17, each group of magnets forming a pole, and is rotatably mounted on a shaft 10. The rotor 4 has a cylindrical outer surface 11 that is separated from the stator surface 12 by an air gap. The magnetic field generated by the windings 6, 6' of the stator 2 crosses the air gap and interacts with the permanent magnets 14, 15, 16, 17 of the rotors 4 to transmit torque on the shaft 10.

The permanent magnets 14, 15, 16, 17 may comprise rare earth elements, such as a Neodymium Iron Boron (NdFeB), hard ferrites, Aluminium Nickel Cobalt (AlNiCo), and Samarium Cobalt (SmCo). They are embedded in cavities the rotor body 5 in the vicinity of the stator 2. Each of the eight poles of the motor 1 comprises four permanent magnets 14,15,16,17. Other distributions of permanent magnets may as well be used (not shown) such as permanent magnets of the spoke type embedded in the rotor in a radial direction, or of the surface type with permanent magnets attached onto the outer surface 12 of the rotor 4. The permanent magnets 14, 15, 16, 17 are installed in pairs with their length direction at an angle Θ to the radius r so that they have a V-shaped configuration. The magnets 14, 15; 16, 17 in each pair are separated by a flux barrier 18, 19, for instance air.

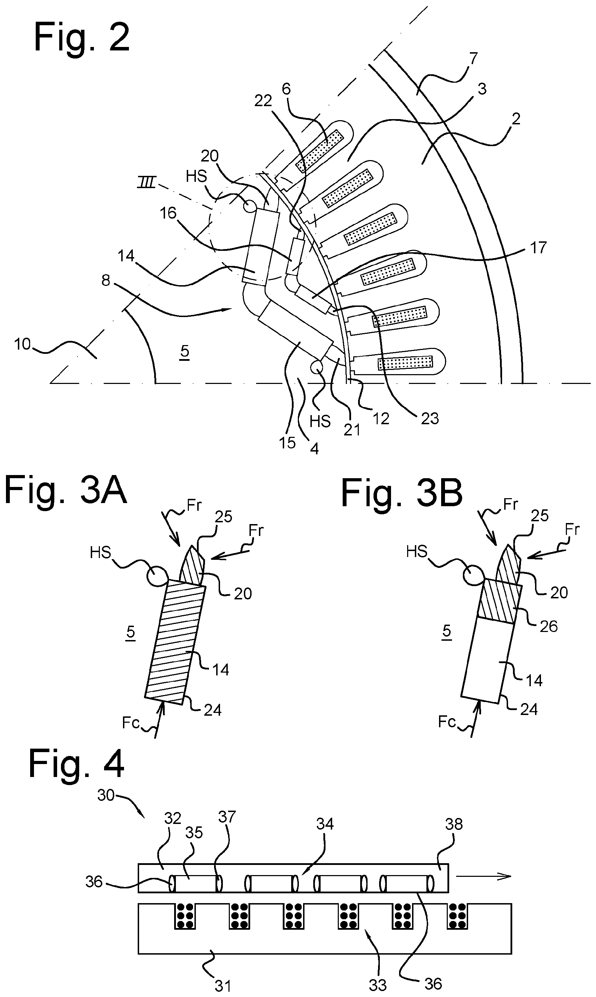

Inverse magnetocaloric elements 20, 21, 22, 23 are embedded in the rotor body 5, adjacent to the permanent magnets 14, 15, 16, 17. The inverse magnetocaloric elements can also be referred to as magnetocaloric elements for cooling. The magnetocaloric elements and their implementation will be described in more detail in Fig. 2.

In the alternative of a motor of the induction type, comprising rotor windings as magnetic elements instead of permanent magnets on the rotor, the magnetocaloric elements are placed similarly in the vicinity of such rotor windings (not shown).

Figure 2 shows an enlarged section of one pole of the electric motor of Fig. 1. Each winding 6 around a tooth 3 of the stator core extends perpendicular to the plane of the drawing. As the permanent magnets 14, 15, 16, 17 are electrically conductive, the relative change in the magnetic field flux generated by the windings generates eddy currents which will heat up the permanent magnets and create hot spots (HS). In the alternative of an induction motor with windings instead of permanent magnets (not shown), the windings heat up due to Ohmic losses. The magnetocaloric elements 20, 21, 22, 23 are advantageously positioned near the permanent magnets (or the windings), preferably at the position of the one or more hot spots (HS). The magnetocaloric elements are magnets that are embedded in the core material of the rotor. The inverse magnetocaloric material is magnetized by the stator flux linkage during acceleration of the rotor 4 in a high magnetization phase of the windings 6, and is subject to a decrease in temperature, subsequently cooling down the surrounding motor elements near the hot spots (HS) and avoiding temperature peaks of the permanent magnets 14,15,16,17 and in the vicinity of the magnets. The threshold rotational speed of the rotor below which the cooling effect occurs may be in the range of 10000 to15000 rpm.

Figure 3a schematically illustrates the direction of the compression force Fc acting on the permanent magnet 14 of Fig. 2 at rotational speeds of over 10000 rpm. The compression force is induced by the centrifugal force that increases with the rotational speed of the rotor. The magnetocaloric element 20 is accommodated in a same cavity 24 in the rotor body 5 in which the permanent magnet 14 is accommodated and is compressed by the permanent magnet 14 and the walls 25 of the cavity by the centrifugal acceleration force. The magnet 14 compresses the magnetocaloric element 20 in the direction of Fc against the walls 25 of the cavity 24 in the rotor body 5, the walls of the cavity exerting reaction force Fr on the magnetocaloric element 21.

In the embodiment of figure 3b, a compression member 26 is placed in the cavity 24, together with the permanent magnet 14. The compression member may comprise a different material than the permanent magnet 14 or the magneto caloric element 20, and be for instance of a high density.

The magnetocaloric material may be a Heusler alloy, for instance a NiMnIn or NiMnSn based alloy. One or more elements of magnetocaloric material may be placed next to the local hot spots. In the example, the magnetocaloric material is placed adjacent to each magnet 14, 15, 16, 17 shown in figure 2. Preferably, the magnetocaloric elements are placed in abutting contact with the permanent magnets, to allow uniaxial compression of the magnetocaloric elements as depicted in Fig 3. Most preferably, the magnetocaloric elements 20,21,22,23 are situated in the vicinity of the stator windings 6. At a rotation rate exceeding 10000 rpm, in the high acceleration phase of the motor, the magnets are subject to high centrifugal induced-compressive forces above 50 MPa which will effectively return the magnetocaloric material of the elements 20, 21, 22 and 23 in Fig. 2 to their initial magnetization state, by reorienting the magnetic domains.

Figure 4 shows a schematic section of an electric motor 30 of the linear type, comprising a stator 31 and a sliding member 32. The stator 31 comprises a plurality of windings 33 to generate an alternating magnetic field under AC excitation and the sliding member comprises a body 38 accommodating a plurality of groups 34 of permanent magnets 35 and magnetocaloric elements 36, 37. Various orientations of the permanent magnets 35 embedded in the sliding member 32 are possible, as well as surface permanent magnets attached onto the surface 36 of the sliding member that faces the stator 31. Similarly, as for the rotary motor shown in Figs. 1-3, the stator magnetic field that is generated by the windings 33 interacts with the permanent magnets 35 and the permanent magnets 35 induce a force in the windings 33, causing the sliding member 32 to oscillate in a plane parallel to the plane of the stator 31. Magnetocaloric elements 36, 37 similar to the magnetocaloric elements of Fig. 1-3 are placed in the vicinity of permanent magnets 35 of the sliding member, near the stator 31, following the same principle as in Fig. 1-3. The high compression forces return the material of the magnetocaloric elements 36,37 to its initial magnetization state, so that the elements are reset for a subsequent cooling cycle.

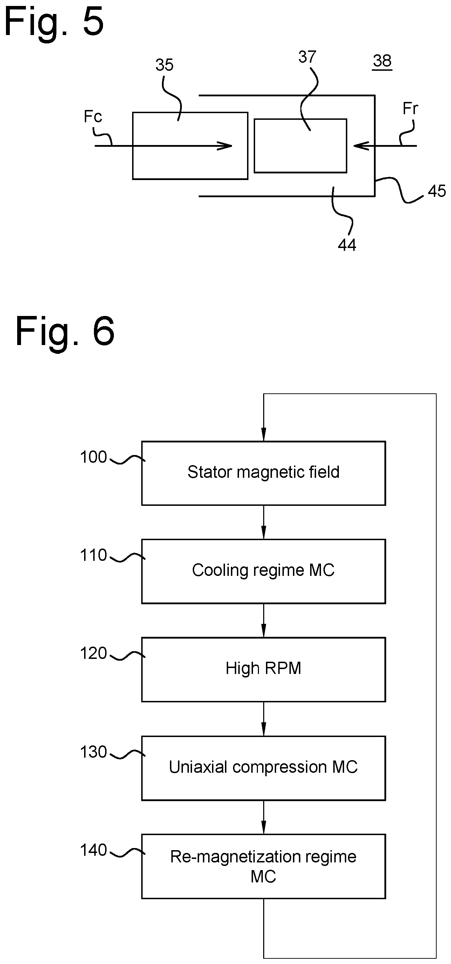

Fig 5 schematically illustrates the direction of the compression force Fc acting on the permanent magnet 35 in Fig. 4. The magnetocaloric element 37 is accommodated in a cavity 44 in the body 38 of the sliding member 32 together with the permanent magnet 35. The magnet 35 compresses the magnetocaloric element 37 in the direction of Fc against the wall 45 of the cavity 44, the wall of the cavity exerting a reaction force Fr on the magnetocaloric element 37.

Figure 6 shows a routine for cooling of an electric motor according to an embodiment of the disclosure, where the electric motor may be any of a motor 1, 30 such as described in Fig. 1-3 or Fig. 4-5 comprising a magnetocaloric element (MC). In step 100 the magnetic field of the stator builds up and in step 110 the magnetocaloric material embedded in the rotor is subject to magnetic fields generated by the stator that are of such a magnitude that, under adiabatic conditions, cooling of the magnets in the rotor by the magnetocaloric material takes effect. The cooling effect ends at step 120, when the rotor or sliding member reaches a predetermined threshold rotational speed or oscillation frequency. The threshold may be between 10000 and 15000 rpm (or between 160 to 250 Hz for a motor of the linear type). In step 130 the rotor has reached a maximum rotational velocity and the magnetocaloric elements are subject to high compressive forces, induced by centrifugal forces, Fc: Fc = *m (π nᵣₚₘ*/ *30)² r,* with m the rotor mass, nᵣₚₘ the rotation per minute of the rotor, and r the rotor radius.

Fc acts uniaxially on the magnetocaloric elements, which are advantageously aligned with the direction of the centrifugal force and leads the magnetocaloric material into an initial magnetization regime by resetting orientations of its magnetic domains in step 140. Centrifugal forces required for reset are proportional to the rotation rate, which can be sufficiently high by the compact and efficient motor design. For a rotation rate nᵣₚₘ of 15000 rpm, compression forces of 50 MPa and higher are exerted.

## Claims

1. An electric motor (1, 30) comprising:
a stator (2, 31) comprising windings (6, 6'; 33) for generating a magnetic field, and
a drive member (4, 32) comprising a number of magnetic elements (14, 15, 16, 17; 35),
the drive member (4, 32) being movable relative to the stator (2, 31) when the stator windings (6, 6'; 33) are electrically energized to generate the magnetic field that interacts with the magnetic elements (14, 15, 16, 17; 35),
the drive member (4, 32) comprising at least one magnetocaloric element (20, 21, 22, 23; 36, 37) that provides cooling of the magnetic elements (14, 15, 16, 17; 35) when the magnetocaloric element is situated in the magnetic field, and **characterized in that** the magnetocaloric element has magnetic domain orientations that are reset when the magnetocaloric element (20, 21, 22, 23; 36, 37) is subject to compression forces resulting from a radial or a linear acceleration of the drive member (4, 32) when the rotational or linear acceleration of the drive member (4, 32) is above a predetermined threshold, the magnetocaloric element (20, 21, 22, 23; 36, 37) being in an abutting relationship with a compression member (26), such as a magnetic element (14, 15, 16, 17; 35), the compression member (26) having a predetermined mass for exerting a compressive force on the magnetocaloric element (20, 21, 22, 23; 36, 37) when the rotational or linear acceleration of the drive member (4, 32) is above the predetermined threshold.

2. The electric motor (1, 30) of claim 1, for rotational or linear accelerations of the drive member (4, 32) above the predetermined threshold, the drive member (4, 32) having a rotational speed higher than 10000 RPM or an oscillation frequency of 160 Hz or more and the compression forces on the magnetocaloric element (20, 21, 22, 23; 36, 37) being larger than 50 MPa.

3. The electric motor (1, 30) according to any of the preceding claims, the magnetocaloric element (20, 21, 22, 23; 36, 37) comprising an inverse magnetocaloric material, preferably a NiMnln based Heusler alloy.

4. The electric motor (1, 30) according to any of the preceding claims, the magnetic elements (14, 15, 16, 17; 35) of the drive member (4, 32) comprising permanent magnets.

5. The electric motor (1, 30) according to claim 4, the drive member (4, 32) comprising a body (5, 38) with a cavity (24, 44) in which a magnetic element (14, 35) and a magnetocaloric element (20, 37) are accommodated in an abutting relationship.

6. The electric motor (1) according to claim 5, the drive member (4) comprising a rotor with a number of permanent magnets (14, 15; 16, 17) arranged in pairs having a V-shaped intersect with a radial line r of the rotor (4).

7. The electric motor (1) according to claim 5, the drive member (4) comprising a rotor with a number of permanent magnets arranged on an outer surface of the rotor.

8. The electric motor (1) according to any of claims 1 to 3, the magnetic elements of the drive member (4, 32) comprising windings.

9. The electric motor (1) according to claim 8, the magnetocaloric element being in an abutting relationship contact with at least one winding.

10. A vehicle comprising the electric motor (1) of any of claims 1-9.

11. A method of cooling an electric motor (1), comprising a stator (2, 31) and a drive member (4, 32) having magnetic elements (14, 15, 16, 17; 35), the drive member (4, 32) being movable relative to the stator (2, 31) and comprising at least one magnetocaloric element (20, 21, 22, 23; 36, 37) situated in a vicinity of the magnetic elements (14, 15, 16, 17; 35), the magnetocaloric element (20, 21, 22, 23; 36, 37) being in an abutting relationship with a compression member (26), such as a magnetic element (14, 15, 16, 17; 35), the compression member (26) having a predetermined mass for exerting a compressive force on the magnetocaloric element (20, 21, 22, 23; 36, 37) when the rotational or linear acceleration of the drive member (4, 32) is above the predetermined threshold, the method comprising:
- removing heat from the magnetic elements (14, 15, 16, 17; 35) via the magnetocaloric element (20, 21, 22, 23; 36, 37) at a rate exceeding 50 W by exposing the magnetocaloric element to a magnetic field that is generated by magnetic elements (6, 6'; 33) of the stator (2, 31), and
- exerting a compression force on the magnetocaloric element (20, 21, 22, 23; 36, 37) of at least 50 MPa, resetting its magnetic domain orientations.

12. Method according to claim 11, the compression force being generated by rotating the drive member (4, 32) at a rotational speed higher than 10000 RPM or reciprocating the drive member (4, 32) at an oscillation frequency of 160 Hz or more.

## Patentansprüche

1. Elektrischer Motor (1, 30), der umfasst:
einen Stator (2, 31), der Wicklungen (6, 6'; 33) zum Erzeugen eines Magnetfelds umfasst, und
ein Antriebselement (4, 32), das eine Anzahl von Magnetelementen (14, 15, 16, 17; 35) umfasst,
wobei das Antriebselement (4, 32) relativ zu dem Stator (2, 31) beweglich ist, wenn die Statorwicklungen (6, 6'; 33) elektrisch erregt werden, um das Magnetfeld zu erzeugen, das mit den Magnetelementen (14, 15, 16, 17; 35) zusammenwirkt,
wobei das Antriebselement (4, 32) mindestens ein magnetokalorisches Element (20, 21, 22, 23; 36, 37) umfasst, das eine Kühlung der Magnetelemente (14, 15, 16, 17; 35) bereitstellt, wenn sich das magnetokalorische Element im Magnetfeld befindet, und **dadurch gekennzeichnet, dass** das magnetokalorische Element Magnetdomänenorientierungen aufweist, die zurückgesetzt werden, wenn das magnetokalorische Element (20, 21, 22, 23; 36, 37) Druckkräften ausgesetzt ist, die sich aus einer radialen oder einer linearen Beschleunigung des Antriebselements (4, 32) ergeben, wenn die Dreh- oder lineare Beschleunigung des Antriebselements (4, 32) über einem vorbestimmten Schwellenwert liegt, wobei das magnetokalorische Element (20, 21, 22, 23; 36, 37) in einer aneinanderstoßenden Beziehung mit einem Kompressionselement (26), wie einem Magnetelement (14, 15, 16, 17; 35), ist, wobei das Kompressionselement (26) eine vorbestimmte Masse zum Ausüben einer Kompressionskraft auf das magnetokalorische Element (20, 21, 22, 23; 36, 37), wenn die Dreh- oder lineare Beschleunigung des Antriebselements (4, 32) über dem vorbestimmten Schwellenwert liegt, aufweist.

2. Elektrischer Motor (1, 30) nach Anspruch 1, für Dreh- oder lineare Beschleunigungen des Antriebselements (4, 32) über dem vorbestimmten Schwellenwert, wobei das Antriebselement (4, 32) eine Drehzahl von mehr als 10000 U/min oder eine Oszillationsfrequenz von 160 Hz oder mehr aufweist und die Kompressionskräfte auf das magnetokalorische Element (20, 21, 22, 23; 36, 37) größer als 50 Mpa sind.

3. Elektrischer Motor (1, 30) nach einem der vorhergehenden Ansprüche, wobei das magnetokalorische Element (20, 21, 22, 23; 36, 37) ein inverses magnetokalorisches Material, vorzugsweise eine Heusler-Legierung auf NiMnIn-Basis, umfasst.

4. Elektrischer Motor (1, 30) nach einem der vorhergehenden Ansprüche, wobei die Magnetelemente (14, 15, 16, 17; 35) des Antriebselements (4, 32) Permanentmagnete umfassen.

5. Elektrischer Motor (1, 30) nach Anspruch 4, wobei das Antriebselement (4, 32) einen Körper (5, 38) mit einem Hohlraum (24, 44) umfasst, in dem ein Magnetelement (14, 35) und ein magnetokalorisches Element (20, 37) in einer aneinanderstoßenden Beziehung aufgenommen sind.

6. Elektrischer Motor (1) nach Anspruch 5, wobei das Antriebselement (4) einen Rotor mit einer Anzahl von Permanentmagneten (14, 15; 16, 17) umfasst, die paarweise angeordnet sind und einen V-förmigen Schnittpunkt mit einer radialen Linie r des Rotors (4) aufweisen.

7. Elektrischer Motor (1) nach Anspruch 5, wobei das Antriebselement (4) einen Rotor mit einer Anzahl von Permanentmagneten umfasst, die auf einer Außenfläche des Rotors angeordnet sind.

8. Elektrischer Motor (1) nach einem der Ansprüche 1 bis 3, wobei die Magnetelemente des Antriebselements (4, 32) Wicklungen umfassen.

9. Elektrischer Motor (1) nach Anspruch 8, wobei das magnetokalorische Element in einem Kontakt einer aneinanderstoßenden Beziehung mit mindestens einer Wicklung steht.

10. Fahrzeug, das den elektrischen Motor (1) nach einem der Ansprüche 1 bis 9 umfasst.

11. Verfahren zum Kühlen eines elektrischen Motors (1), das einen Stator (2, 31) und ein Antriebselement (4, 32) mit Magnetelementen (14, 15, 16, 17; 35) umfasst, wobei das Antriebselement (4, 32) relativ zu dem Stator (2, 31) beweglich ist und mindestens ein magnetokalorisches Element (20, 21, 22, 23; 36, 37) umfasst, das sich in einer Nähe der Magnetelemente (14, 15, 16, 17; 35) befindet, das magnetokalorische Element (20, 21, 22, 23; 36, 37) in einer aneinanderstoßenden Beziehung mit einem Kompressionselement (26), wie einem Magnetelement (14, 15, 16, 17; 35), ist, das Kompressionselement (26) eine vorbestimmte Masse zum Ausüben einer Kompressionskraft auf das magnetokalorische Element (20, 21, 22, 23; 36, 37), wenn die Dreh- oder lineare Beschleunigung des Antriebselements (4, 32) über dem vorbestimmten Schwellenwert liegt, aufweist, wobei das Verfahren umfasst:
- Abführen von Wärme von den Magnetelementen (14, 15, 16, 17; 35) über das magnetokalorische Element (20, 21, 22, 23; 36, 37) mit einer Leistung, die über 50 W hinausgeht, indem das magnetokalorische Element einem Magnetfeld ausgesetzt wird, das durch Magnetelemente (6, 6'; 33) des Stators (2, 31) erzeugt wird, und
- Ausüben einer Kompressionskraft auf das magnetokalorische Element (20, 21, 22, 23; 36, 37) von mindestens 50 MPa, wodurch seine Magnetdomänenorientierungen zurückgesetzt werden.

12. Verfahren nach Anspruch 11, wobei die Kompressionskraft durch Drehen des Antriebselements (4, 32) mit einer Drehzahl von mehr als 10000 U/min oder Hin- und Herbewegen des Antriebselements (4, 32) mit einer Oszillationsfrequenz von 160 Hz oder mehr erzeugt wird.

## Revendications

1. Moteur électrique (1, 30), comprenant :
un stator (2, 31) comprenant des enroulements (6, 6' ; 33) pour générer un champ magnétique, et
un organe d'entraînement (4, 32) comprenant un nombre d'éléments magnétiques (14, 15, 16, 17 ; 35),
l'organe d'entraînement (4, 32) étant mobile relativement au stator (2, 31) lorsque les enroulements de stator (6, 6' ; 33) sont mis sous tension électriquement pour générer le champ magnétique qui interagit avec les éléments magnétiques (14, 15, 16, 17 ; 35),
l'organe d'entraînement (4, 32) comprenant au moins un élément magnétocalorique (20, 21, 22, 23 ; 36, 37) qui permet le refroidissement des éléments magnétiques (14, 15, 16, 17 ; 35) lorsque l'élément magnétocalorique est situé dans le champ magnétique, et **caractérisé en ce que** l'élément magnétocalorique a des orientations de domaine magnétique qui sont remises à l'état initial lorsque l'élément magnétocalorique (20, 21, 22, 23 ; 36, 37) est soumis à des forces de compression résultant d'une accélération radiale ou linéaire de l'organe d'entraînement (4, 32) lorsque l'accélération rotative ou linéaire de l'organe d'entraînement (4, 32) est supérieure à un seuil prédéterminé, l'élément magnétocalorique (20, 21, 22, 23 ; 36, 37) étant en une relation venant en butée avec un organe de compression (26), tel qu'un élément magnétique (14, 15, 16, 17 ; 35), l'organe de compression (26) ayant une masse prédéterminée pour appliquer une force de compression sur l'élément magnétocalorique (20, 21, 22, 23 ; 36, 37) lorsque l'accélération rotative ou linéaire de l'organe d'entraînement (4, 32) est supérieure au seuil prédéterminé.

2. Moteur électrique (1, 30) de la revendication 1, pour accélérations rotative ou linéaire de l'organe d'entraînement (4, 32) au-dessus du seuil prédéterminé, l'organe d'entraînement (4, 32) ayant une vitesse rotative supérieure à 10 000 tr/min ou une fréquence d'oscillation de 160 Hz ou plus et les forces de compression sur l'élément magnétocalorique (20, 21, 22, 23 ; 36, 37) étant supérieures à 50 MPa.

3. Moteur électrique (1, 30) selon de quelconques des revendications précédentes, l'élément magnétocalorique (20, 21, 22, 23 ; 36, 37) comprenant un matériau magnétocalorique inverse, de préférence un alliage Heusler à base NiMnIn.

4. Moteur électrique (1, 30) selon de quelconques des revendications précédentes, les éléments magnétiques (14, 15, 16, 17 ; 35) de l'organe d'entraînement (4, 32) comprenant des aimants permanents.

5. Moteur électrique (1, 30) selon la revendication 4, l'organe d'entraînement (4, 32) comprenant un corps (5, 38) avec une cavité (24, 44) dans laquelle un élément magnétique (14, 35) et un élément magnétocalorique (20, 37) sont logés en une relation venant en butée.

6. Moteur électrique (1) selon la revendication 5, l'organe d'entraînement (4) comprenant un rotor avec un nombre d'aimants permanents (14, 15 ; 16, 17) agencés en paires ayant une intersection en forme de V avec une ligne radiale r du rotor (4).

7. Moteur électrique (1) selon la revendication 5, l'organe d'entraînement (4) comprenant un rotor avec un nombre d'aimants permanents agencés sur une surface extérieure du rotor.

8. Moteur électrique (1) selon quelconques des revendications 1 à 3, les éléments magnétiques de l'organe d'entraînement (4, 32) comprenant des enroulements.

9. Moteur électrique (1) selon la revendication 8, l'élément magnétocalorique étant en contact en relation venant en butée avec au moins un enroulement.

10. Véhicule, comprenant le moteur électrique (1) de quelconques des revendications 1 à 9.

11. Procédé de refroidissement d'un moteur électrique (1), comprenant un stator (2, 31) et un organe d'entraînement (4, 32) ayant des éléments magnétiques (14, 15, 16, 17 ; 35), l'organe d'entraînement (4, 32) étant mobile relativement au stator (2, 31) et comprenant au moins un élément magnétocalorique (20, 21, 22, 23 ; 36, 37) situé dans un voisinage des éléments magnétiques (14, 15, 16, 17 ; 35), l'élément magnétocalorique (20, 21, 22, 23 ; 36, 37) étant en une relation venant en butée avec une organe de compression (26), tel qu'un élément magnétique (14, 15, 16, 17 ; 35), l'organe de compression (26) ayant une masse prédéterminée pour appliquer une force de compression sur l'élément magnétocalorique (20, 21, 22, 23 ; 36, 37) lorsque l'accélération rotative ou linéaire de l'organe d'entraînement (4, 32) est au-dessus du seuil prédéterminé, le procédé comprenant :
- l'élimination de chaleur des éléments magnétiques (14, 15, 16, 17 ; 35) par l'intermédiaire de l'élément magnétocalorique (20, 21, 22, 23 ; 36, 37) à un taux dépassant 50 W en exposant l'élément magnétocalorique à un champ magnétique qui est généré par des éléments magnétiques (6, 6' ; 33) du stator (2, 31), et
- l'application d'une force de compression sur l'élément magnétocalorique (20, 21, 22, 23 ; 36, 37) d'au moins 50 MPa, remettant à l'état initial ses orientations de domaine magnétique.

12. Procédé selon la revendication 11, la force de compression étant générée en mettant en rotation l'organe d'entraînement (4, 32) à une vitesse rotative supérieure à 10 000 tr/min ou en déplaçant en va-et-vient l'organe d'entraînement (4, 32) à une fréquence d'oscillation de 160 Hz ou plus.
